# EUROPEAN PATENT SPECIFICATION

(11) **EP 3 124 340 B1**
(45) Date of publication and mention of the grant of the patent: **28.11.2018**
(21) Application number: 14887394.6
(22) Date of filing: 26.03.2014
(51) Int. Cl.: B60T 7/06

(54) **BRAKE PEDAL DEVICE FOR AUTOMOTIVE VEHICLE**
BREMSPEDALVORRICHTUNG FÜR KRAFTFAHRZEUG
DISPOSITIF DE PÉDALE DE FREIN POUR VÉHICULE À MOTEUR

(43) Date of publication of application: 01.02.2017
(73) Proprietor: Yorozu Corporation, Yokohama-shi, Kanagawa 222-8560 (JP)
(72) Inventor: KAWAGUCHI, Shuichiro, Yokohama-shi Kanagawa 222-8560 (JP); KAWANO, Shinji, Yokohama-shi Kanagawa 222-8560 (JP); ISHIZUKI, Masaharu, Yokohama-shi Kanagawa 222-8560 (JP)
(74) Representative: Weber, Jean-François
(86) International application number: PCT/JP2014/058665
(87) International publication number: WO 2015/145640

(56) References cited:
- EP-A1- 1 862 363
- WO-A1-2004/026650
- JP-A- 2001 219 828
- JP-A- 2003 252 245
- JP-A- 2005 285 064
- JP-A- 2005 285 066
- JP-A- 2005 285 066

## Description

### TECHNICAL FIELD

The present invention relates to a brake pedal device for an automotive vehicle.

### BACKGROUND ART

When an automotive vehicle has a frontal collision, a front portion of a vehicle body is largely deformed toward a rear side of the vehicle body, and a brake pedal rotates rearward as well relatively to the front portion of the vehicle body. With the brake pedal being stepped on by a driver at the time, large force acts on a lower limb and can cause injury to a body, so that various kinds of development are carried out for improved safety.

A brake pedal device disclosed in, for example, Patent Literature 1 mentioned below includes a brake pedal pivotally supported to be freely rotatable around a rotation center axis provided at a pedal bracket fixed to a vehicle body, and a link member rotatably connected to the brake pedal by a connection part. The link member includes a master cylinder connection part coupled to a master cylinder, a collision part which comes into collision with a part of the vehicle body in a frontal collision of a vehicle, and an engagement part which engages with the brake pedal and disengages toward a front side of the vehicle body in the collision between the collision part and the part of the vehicle body, and the connection part is positioned between the rotation center axis and the master cylinder connection part.

According to the brake pedal device thus constructed, the link member rotatably connected to the brake pedal by the connection part has the engagement part which disengages toward the front side of the vehicle body in the collision with the part of the vehicle body. As a result of this disengagement, the link member moves forward. Because of being positioned between the rotation center axis of the brake pedal and the master cylinder connection part of the link member, the connection part moves forward, and the brake pedal rotates forward on the rotation center axis accordingly. Through use of force generated by the collision, a lower portion of the brake pedal can thus be rotated toward the front side of the vehicle body, thus allowing suitable prevention of injury to the body.
Document JP-2005 285066A discloses a pedal support structure of a vehicle capable of forcibly displacing a pedal to the forward side of the vehicle body at the time of a collision.

### Citation List

### Patent Literature

Patent Literature 1: JP-2011-037309 A

### SUMMARY OF INVENTION

### Technical Problem

With the brake pedal device described in Patent Literature 1, however, a compressive load which acts on a push rod from the master cylinder acts in a direction that disengages the engagement part of the link member under normal conditions before the collision. Accordingly, a measure such as increasing the depth of engagement of the engagement part has to be taken to prevent the engagement part of the link member from being disengaged by the compressive load, thus complicating manufacture of the brake pedal device.

To solve the above problem, the present invention aims to provide a brake pedal device for an automotive vehicle that is capable of rotating a lower portion of a brake pedal toward a front side of a vehicle body by using force generated by a collision and suitably preventing disengagement of a link member under normal conditions before the collision.

In order to achieve the above object, a brake pedal device for an automotive vehicle is in accordance with the subject-matter of claim 1.

### Advantageous Effect of the Invention

According to the brake pedal device of the invention, the link member rotatably connected to the brake pedal by the connection part includes the engagement part which disengages toward the front side of the vehicle body in the collision with the part of the vehicle body. As a result of this disengagement, the link member moves forward. In association with the forward movement of the link member, the connection part moves forward, whereby the brake pedal rotates forward around the rotation center axis. Consequently, the lower portion of the brake pedal can be rotated toward the front side of the vehicle body through use of the force generated by the collision.

Because the connection part is positioned on an extended line of the push rod in relation to the master cylinder, the action of a compressive load which acts on the push rod from the master cylinder is reduced in a direction that disengages the link member under normal conditions before the collision. Consequently, disengagement of the link member can be prevented suitably. This brake pedal device which can be provided for the automotive vehicle can thus rotate the lower portion of the brake pedal toward the front side of the vehicle body by using the force generated by the collision and suitably prevent the link member from disengaging under normal conditions.

### BRIEF DESCRIPTION OF DRAWINGS

FIG. 1 is a side view schematically illustrating a brake pedal device in accordance with a first exemplary embodiment.
FIG. 2 is a perspective view of the brake pedal device in accordance with the first embodiment.
FIG. 3 is an exploded perspective view of the brake pedal device in accordance with the first embodiment.
FIG. 4 is a partially transmissive side view of the brake pedal device in accordance with the first embodiment.
FIG. 5 is a side view schematically illustrating a state of the brake pedal device immediately before a frontal collision in accordance with the first embodiment.
FIGS. 6(A) and 6(B) are enlarged side views of essential parts, each illustrating a state of the brake pedal device in the frontal collision in accordance with the first embodiment, with FIG. 6(A) illustrating the state before a link member is disengaged and FIG. 6(B) illustrating the state after the link member is disengaged.
FIG. 7 is a side view schematically illustrating the brake pedal device when the link member is disengaged in the frontal collision.
FIG. 8 is a side view schematically illustrating the brake pedal device when a brake pedal is depressed after the link member is disengaged.
FIG. 9 is a top view of the brake pedal device after the link member is disengaged.
FIG. 10 is a side view schematically illustrating a brake pedal device in accordance with a second exemplary embodiment.
FIG. 11 is a side view schematically illustrating the brake pedal device when a link member is disengaged in a frontal collision in accordance with the second embodiment.
FIG. 12 is a side view schematically illustrating the brake pedal device when a brake pedal is depressed after the link member is disengaged in accordance with the second embodiment.

### DESCRIPTION OF EMBODIMENTS

Exemplary embodiments of the present invention are described hereinafter with reference to the accompanying drawings.

### First Exemplary Embodiment

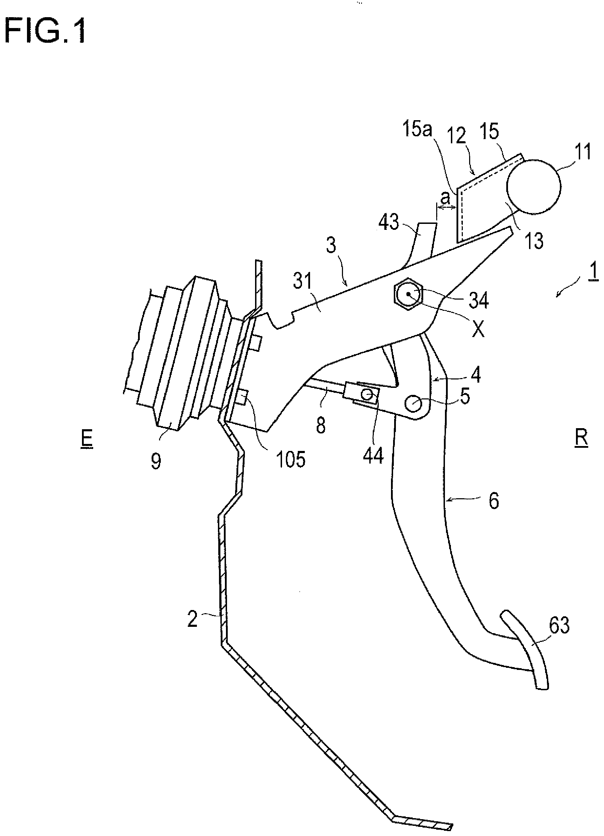

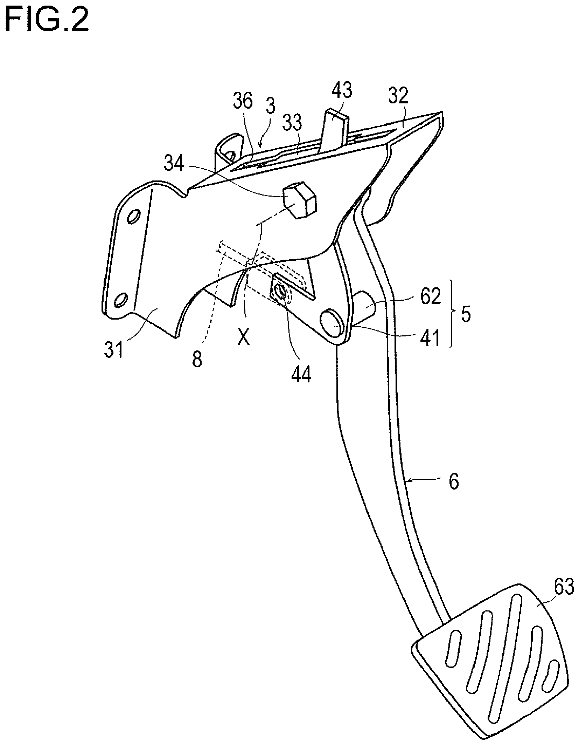

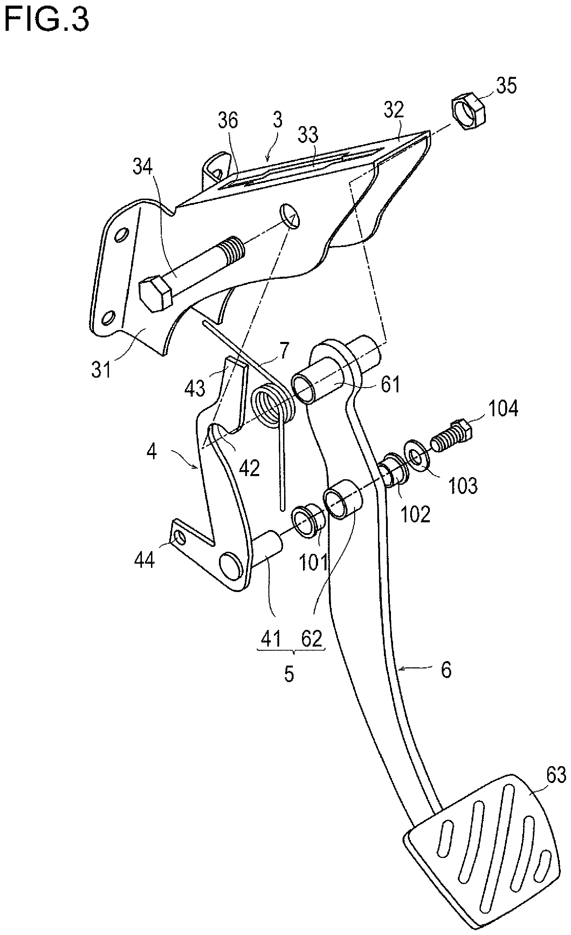

As shown in FIGS. 1 to 3, a brake pedal device 1 in accordance with the first exemplary embodiment of the invention is mounted via a pedal bracket 3 to a dash lower panel 2 which forms a lower part of a dash panel serving as a partition between a passenger compartment R and an engine room E of a passenger car.

Base end parts of the pedal bracket 3 are mounted to the dash lower panel 2 by bolts 105 and nuts (not shown). The pedal bracket 3 has a pair of side plates 31 formed to extend rearwardly from the base end parts in substantially parallel relationship, and a ceiling plate 32 formed between upper edges of the side plates 31. The ceiling plate 32 has an opening 33. A bolt 34 is passed through the side plates 31 of the pedal bracket 3, and a nut 35 is screwed on the bolt 34 from an opposite side, whereby a rotation center axis X is formed.

A brake pedal 6 is connected with the bolt 34 to be rotatable around the rotation center axis X in forward and rearward directions. The brake pedal 6 is formed with, at its upper end part, a tube-shaped engaging cylinder (shaft member) 61 through which the bolt 34 is passed. The forward and rearward directions mentioned here are those viewed longitudinally of the vehicle.

The brake pedal 6 is formed with a tube-shaped connecting cylinder 62 at a predetermined distance downward from its upper end. Through this connecting cylinder 62, a connecting shaft 41 of a link member 4 is passed via a bushing 101. A bolt 104 is screwed via a bushing 102 and a washer 103 into the connecting shaft 41 of the link member 4 that is passed through the connecting cylinder 62 of the brake pedal 6. The brake pedal 6 and the link member 4 are thus rotatably connected by a connection part 5 formed of the connecting shaft 41 and the connecting cylinder 62.

The engaging cylinder 61 is fitted with a spiral part of a return spring 7 at its outer peripheral surface, and the return spring 7 has one end in contact with the ceiling plate 32 of the pedal bracket 3, and the other end in contact with the connecting cylinder 62. Accordingly, the brake pedal 6 is urged rearward by the return spring 7 and retained in a position (normal position) shown in FIG. 1 by a stopper (not shown) when not being depressed.

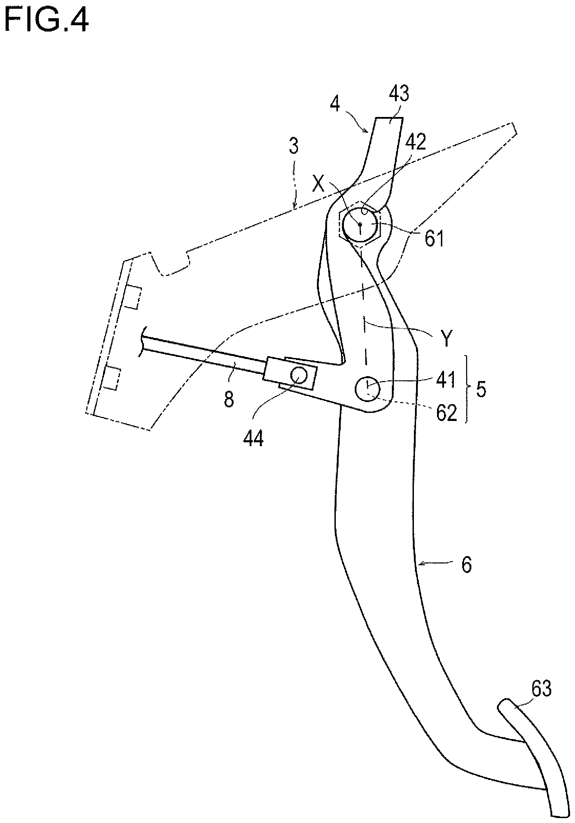

The link member 4 is formed with a hook-shaped engagement part 42, which engages with the outer peripheral surface of the engaging cylinder 61 of the brake pedal 6, at a predetermined distance upward from the connecting shaft 41. As shown in FIG. 4, the engagement part 42 is formed along a rear side of the link member 4 and brought into engagement with the engaging cylinder 61 from the front. Here, the hook-shaped engagement part 42 extends rearward beyond an extension line Y extending from the connecting cylinder 62 (of the connection part 5) to the engaging cylinder 61 (or the rotation center axis X) to be hooked on the engaging cylinder 61 for engagement. Therefore, once the engagement part 42 engages with the engaging cylinder 61, the engagement part 42 is not disengaged unless strong force acts on the link member 4.

It is to be noted that the engagement part 42 may be formed to be hooked on a lower portion of the outer peripheral surface of the engaging cylinder 61 instead of being hooked on an upper portion of the outer peripheral surface of the engaging cylinder 61. In addition, the position of engagement between the engagement part 42 and the brake pedal 6 may not necessarily be the shaft member (engaging cylinder 61) provided along the rotation center axis X. In other words, the engagement part 42 may be engaged with any part of the brake pedal 6 as long as the link member 4 operates integrally with the brake pedal 6 until strong force effecting disengagement acts on the link member 4 and can be detached forward relative to the brake pedal 6 as a result of the strong force acting on the link member 4.

The link member 4 is formed with, at a position spaced a predetermined distance away from the connecting shaft 41 toward a push rod 8, a master cylinder connection part 44 to which one end of the push rod 8 is mounted, and the other end of the push rod 8 is connected to a master cylinder 9 (refer to FIG. 1). Unless the engagement part 42 disengages, the link member 4 and the brake pedal 6 rotate integrally in the forward and rearward directions around the rotation center axis X, so that when a pedal pad 63 fixed to a lower end part of the brake pedal 6 is depressed, the push rod 8 is pushed forward by the master cylinder connection part 44, and resulting force is amplified by the master cylinder 9 and transmitted to a brake section.

The link member 4 is formed with, at its upper end portion, a collision part 43 projecting upward through the opening 33 of the ceiling plate 32. The collision part 43 is formed to have a smooth front side. The opening 33 formed in the ceiling plate 32 is long in the forward and rearward directions to allow the collision part 43 to move in the forward and rearward directions and has, at its front, a rotation restricting part 36 with which the smooth side of the collision part 43 makes slidable contact when the collision part 43 moves forward.

In the vicinity of an upper portion of the brake pedal device 1, a steering member 11 is provided (refer to FIG. 1). The steering member 11 is a part for reinforcing a vehicle body and has the shape of a tube.

In the present embodiment, a collision impact bracket 12 is mounted to the steering member 11.

The collision impact bracket 12 is fixed to the steering member 11 at its base end and has a collision plate 15 disposed between a pair of side plates 13. The collision plate 15 is fixed to the side plates 13 at its base end portion and bent downward at its center to form a substantially perpendicular contact face 15a.

The collision part 43 of the link member 4 projects toward the contact face 15a of the collision plate 15 and is set such that a collision displacement distance a is present between the collision part 43 of the link member 4 and the contact face 15a. With a normal passenger car, considering that the distance that an engine and others move rearward due to a frontal collision ranges from 200 mm to 300 mm, it is preferable that the collision displacement distance a be also set at about 200 mm to 300 mm. However, the collision displacement distance a is to be changed according to each vehicle and thus is not limited only to the above.

With the collision displacement distance a provided between a leading end of the collision part 43 and the contact face 15a, the device of the present embodiment does not operate unless a collision effecting a certain degree of displacement takes place.

The height of the collision part 43 and the shape of the engagement part 42 are elements for determining impact force required for disengagement of the engagement part 42 and thus are preferably changed in an appropriate manner according to each vehicle. According to the brake pedal device 1 of the present embodiment, the connection part 5 is positioned on an extended line of the push rod 8 in relation to the master cylinder connection part 44, whereby the action of a compressive load which acts on the push rod from the master cylinder 9 can be reduced in a direction that disengages the link member 4. For this reason, the hook-shaped engagement part 42 is not necessarily required to extend rearward beyond the extension line Y extending from the connecting cylinder 62 (of the connection part 5) to the engaging cylinder 61 (or the rotation center axis X).

A description is provided next of the action of the brake pedal device 1 in accordance with the first embodiment.

Under normal conditions before a collision, the brake pedal device 1 has, as shown in FIG. 1, the collision displacement distance a between the leading end of the collision part 43 and the contact face 15a. Moreover, the connection part 5 is positioned on the extended line of the push rod 8 in relation to the master cylinder connection part 44. It is to be noted that the connection part 5 is mentioned here to be positioned on the extended line of the push rod 8 in relation to the master cylinder connection part 44, but may not perfectly be on the extended line, thus allowing inclusion of slight tolerance within the scope of the functional effect of the present invention.

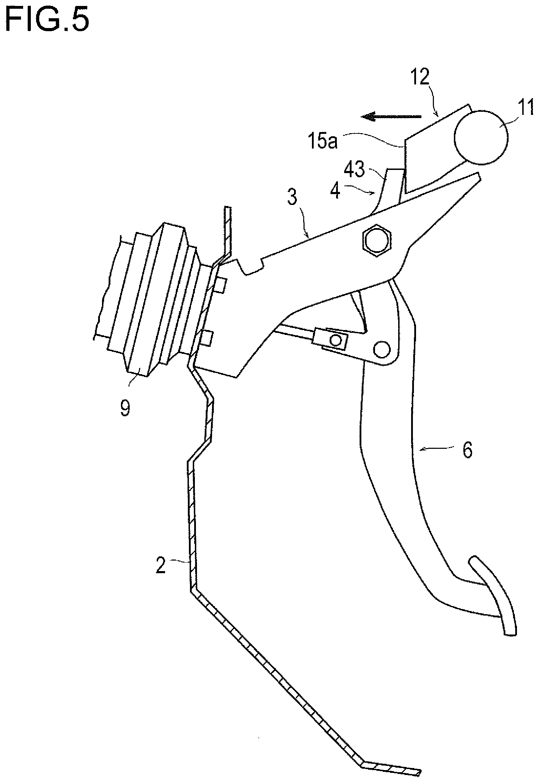

When a frontal collision takes place in this condition, as shown in FIG. 5, the pedal bracket 3 and others move rearward, and the leading end of the collision part 43 approaches the collision impact bracket 12 accordingly.

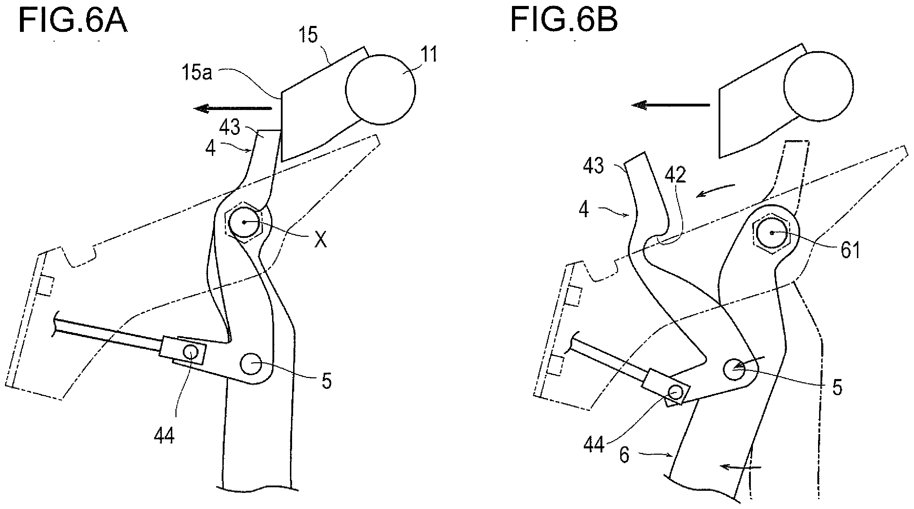

When the leading end of the collision part 43 moves more than the collision displacement distance a, the leading end of the collision part 43 abuts against the contact face 15a as shown in FIG. 6(A). Thereafter, the engagement part 42 is disengaged forward from the engaging cylinder 61 as shown in FIG. 6(B) by collision force acting on the collision part 43 and rotates counterclockwise in the drawing. Here, the link member 4 is in a condition of being rotatably connected to the brake pedal 6 by the connection part 5. As the link member 4 rotates counterclockwise in this condition, the connection part 5 moves forward with the master cylinder connection part 44 serving as a fulcrum.

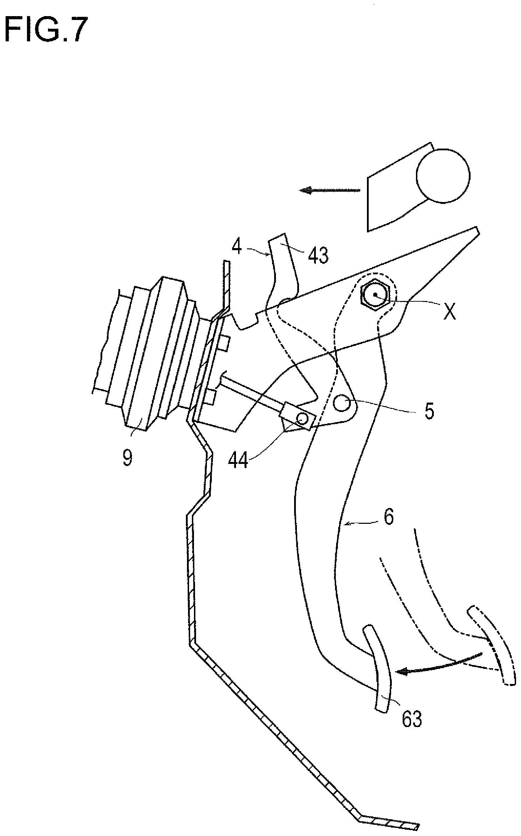

As the connection part 5 moves forward, the brake pedal 6 rotates clockwise around the rotation center axis X, and the pedal pad 63 moves forward as shown in FIG. 7, so that no rearward displacement of the brake pedal 6 occurs. In this way, injury to a lower limb that is caused by the brake pedal 6 in the frontal collision can be suppressed.

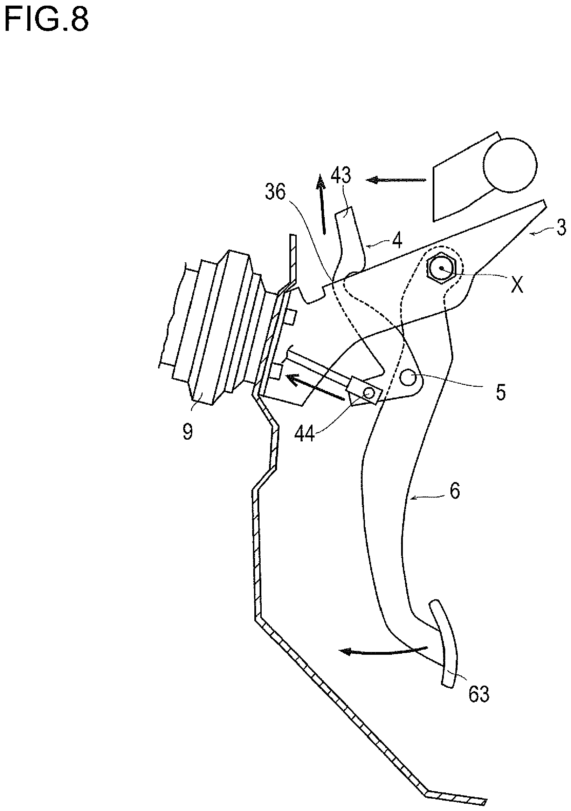

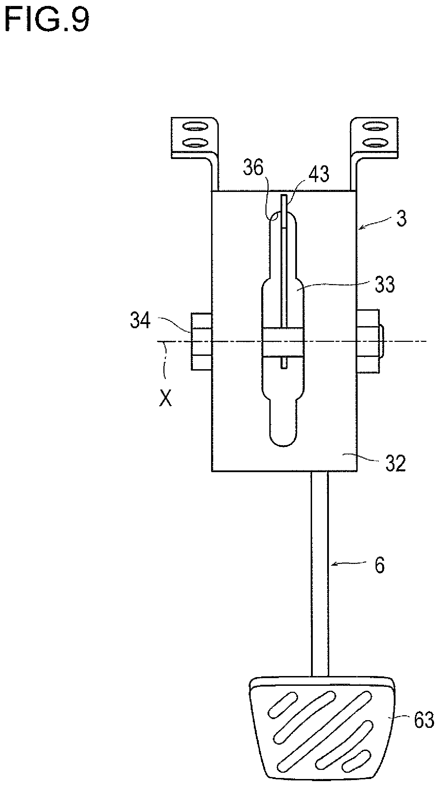

As shown in FIGS. 8 and 9, the smooth front side of the collision part 43 which has moved forward abuts against the rotation restricting part 36 of the opening 33 in the ceiling plate 32. As the pedal pad 63 is depressed forward in this condition, the brake pedal 6 rotates on the rotation center axis X, and the connection part 5 moves forward accordingly. As the connection part 5 moves forward, the link member 4 attempts to move forward in its entirety. However, because the collision part 43 of the link member 4 is in a condition of abutting against the rotation restricting part 36, the collision part 43 formed with the smooth side slides upward along the rotation restricting part 36, and the master cylinder connection part 44 moves forward accordingly. As a result, the push rod 8 is pushed forward, whereby braking can be brought into action without any problem even after the frontal collision.

As described above, the brake pedal device 1 in accordance with the first embodiment includes the brake pedal 6 pivotally supported to be freely rotatable around the rotation center axis X provided at the pedal bracket 3 fixed to the vehicle body, and the link member 4 rotatably connected to the brake pedal 6 by the connection part 5. The link member 4 has the master cylinder connection part 44 coupled to the master cylinder 9 through the push rod 8, the collision part 43 which comes into collision with the part of the vehicle body in the frontal collision of the vehicle, and the engagement part 42 which engages with the brake pedal 6 and disengages toward a front side of the vehicle body in the collision between the collision part 43 and the part of the vehicle body, and the connection part 5 is positioned on the extended line of the push rod 8 in relation to the master cylinder connection part 44. According to this structure, the link member 4 rotatably connected to the brake pedal 6 by the connection part 5 has the engagement part 42 which disengages toward the front side of the vehicle body in the collision with the part of the vehicle body. As a result of this disengagement, the link member 4 moves forward. In association with the forward movement of the link member 4, the connection part 5 moves forward, whereby the brake pedal 6 rotates forward on the rotation center axis X. Consequently, a lower portion of the brake pedal can be rotated toward the font side of the vehicle body through use of the force generated by the collision. In addition, because the connection part 5 is positioned on the extended line of the push rod 8 in relation to the master cylinder connection part 44, the action of the compressive load which acts on the push rod 8 from the master cylinder 9 can be reduced in the direction that disengages the link member 4 under normal conditions before the collision, thus enabling suitable prevention of the disengagement of the link member 4. The brake pedal device 1 which can be provided for the automotive vehicle can thus rotate the lower portion of the brake pedal toward the front side of the vehicle body by utilizing the force generated by the collision and suitably prevent the link member 4 from disengaging under normal conditions.

The engagement part 42 has the form of a hook to engage with the portion of the outer peripheral surface of the engaging cylinder 61 disposed along the rotation center axis X. Since the engagement of the engagement part 42 is enabled by the use of the engaging cylinder 61 disposed along the rotation center axis X, the need for another structure for engaging the engagement part 42 is eliminated, thus allowing further simplification of the structure and weight reduction.

Since the engagement part 42 extends rearward beyond the extension line extending from the connection part 5 to the rotation center axis X, the engagement part 42 is not disengaged once the engagement part 42 engages with the engaging cylinder 61 unless the strong force acts on the link member 4.

The pedal bracket 3 has the rotation restricting part 36, which contacts the link member 4 having the disengaged engagement part 42 for restricting the rotation of the link member 4 with respect to the pedal bracket 3 and is slidable to the link member 4. By depressing the brake pedal 6 with the disengaged link member 4 abutted against the rotation restricting part 36 of the pedal bracket 3, the link member 4 is allowed to slide while having its rotation restricted, whereby the master cylinder 9 can be pushed to effect braking operation. Consequently, the braking operation can be carried out even after the frontal collision, whereby safety can be improved.

### Second Exemplary Embodiment

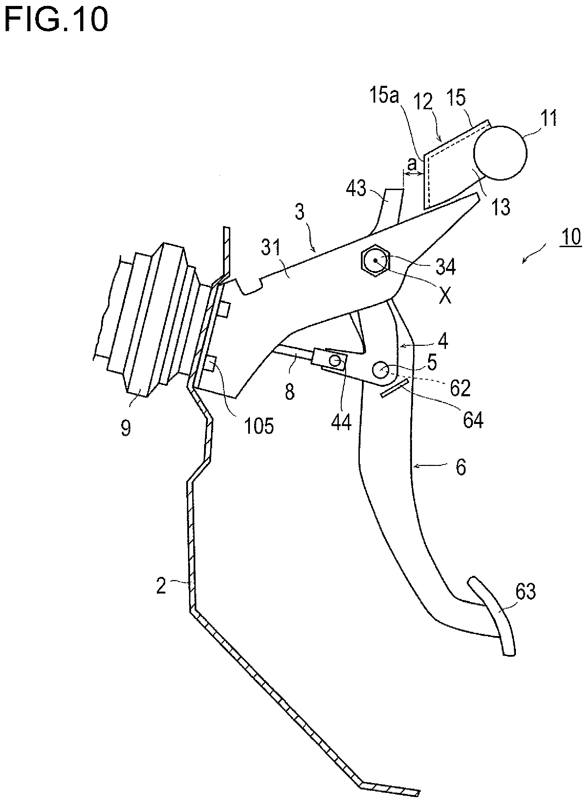

As shown in FIG. 10, a brake pedal device 10 in accordance with the second exemplary embodiment of the invention has a rotation restricting part 64 provided to a brake pedal 6 and thus differs from that of the first embodiment in which the rotation restricting part 36 is formed at the opening 33 of the ceiling plate 32. The device 10 is structurally similar to that of the first embodiment, except for the rotation restricting part 64, so that similar elements have the same reference marks, and the description of those elements is omitted.

As shown in FIG. 10, the brake pedal 6 is provided with, at a predetermined distance downward from a connecting cylinder 62, the plate-shaped rotation restricting part 64 downwardly inclined toward a front side of a vehicle body. The rotation restricting part 64 may be fixed to the brake pedal 6 by welding, a bolt or the like or may be integrally formed with the brake pedal 6.

A description is provided next of the action of the brake pedal device 10 in accordance with the second embodiment. It is to be noted that the description of forward movement of a pedal pad 63 as a result of disengagement of an engagement part 42 in a collision is the same as that of the first embodiment and is thus omitted.

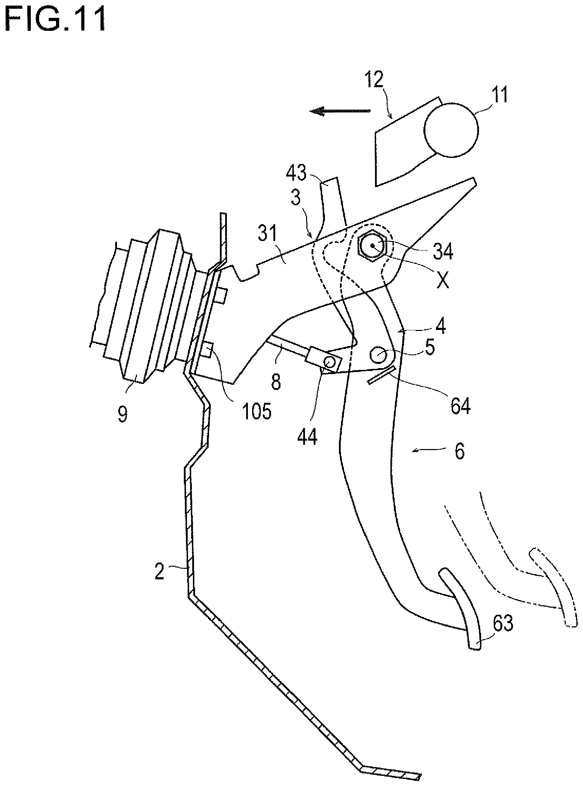

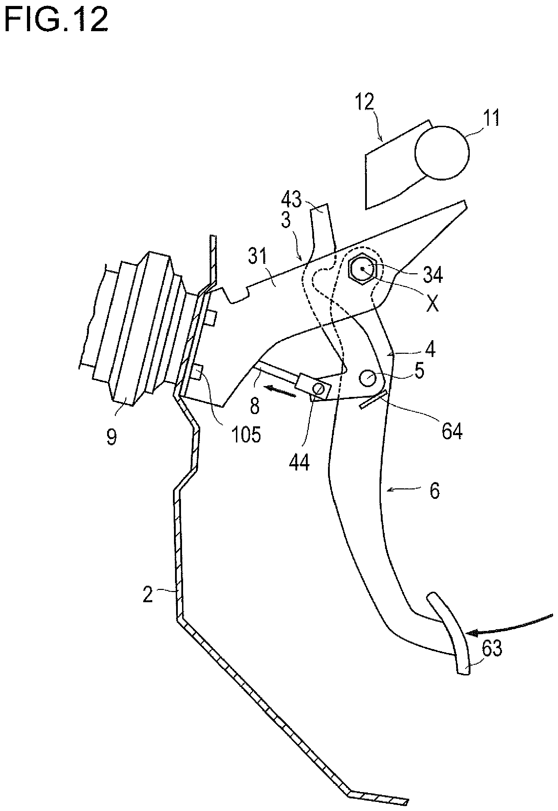

As the engagement part 42 is disengaged by forward movement of a collision part 43, as shown in FIG. 11, the pedal pad 63 moves forward while a link member 4 rotates relatively to the brake pedal 6 around a connection part 5. When this rotation reaches a predetermined angle, a part in the vicinity of a part where a connecting shaft 41 of the link member 4 is formed abuts against the rotation restricting part 64 provided to the brake pedal 6, whereby further rotation of the link member 4 relative to the brake pedal 6 is restricted. As the pedal pad 63 is depressed forward in this condition, as shown in FIG. 12, the brake pedal 6 rotates around a rotation center axis X, and the connection part 5 urges the link member 4 forward, thereby causing a master cylinder connection part 44 to move forward. As a result, a push rod 8 is pushed forward, whereby braking can be brought into action without any problem even in a frontal collision.

As described above, the brake pedal 6 in the brake pedal device 10 of the second embodiment has the rotation restricting part 64 which restricts the rotation of the link member 4 by contact with the link member 4 when the link member 4 with the disengaged engagement part 42 rotates a predetermined amount relative to the brake pedal 6, so that by depressing the brake pedal 6 with the disengaged link member 4 abutted against the rotation restricting part 64 of the brake pedal 6, a master cylinder 9 is pushed while the rotation of the link member 4 is restricted, thus enabling braking operation. Consequently, the braking operation can be carried out even after the frontal collision, whereby safety can be improved.

It is to be noted that the present invention is not limited only to the above-described embodiments and allows those skilled in the art to make a variety of changes within the scope of the technical idea of the present invention. For example, the description of the brake pedal lever for the passenger car has been provided in the foregoing embodiments; however, the invention is not limited only to this and is similarly practicable in a variety of vehicles.

The member which collides with the collision part 43 in the frontal collision may be, instead of the collision impact bracket 12, any part of the vehicle that undergoes displacement relative to the collision part 43 in the frontal collision.

In the embodiments, the link member 4 and the brake pedal 6 are pivotally connected at the connection part 5 as well as at the rotation center axis X to be mutually rotatable with a clearance therebetween. However, on condition that the link member 4 and the brake pedal 6 can rotate relative to each other as a result of the collision force acting on the collision part 43, the link member 4 and the brake pedal 6 may be connected without any clearance by, for example, press fitting, whereby backlash between the link member 4 and the brake pedal 6 can be prevented.

### Industrial Applicability

The present invention can be used suitably as a brake pedal device for an automotive vehicle that rotates a lower portion of a brake pedal toward a front side of a vehicle body by using force generated by a collision.

### Reference Signs List

1, 10: Brake pedal device
3: Pedal bracket
4: Link member
5: Connection part
6: Brake pedal
8: Push rod
9: Master cylinder
10: Brake pedal device
36: Rotation restricting part
42: Engagement part
43: Collision part
44: Master cylinder connection part
61: Engaging cylinder (shaft member)
64: Rotation restricting part
a: Collision displacement distance
X: Rotation center axis

## Claims

1. A brake pedal device (1, 10) for an automotive vehicle, comprising:
a brake pedal (6) pivotally supported to be freely rotatable around a rotation center axis (X) provided at a pedal bracket (3) fixed to a vehicle body; and
a link member (4) rotatably connected to the brake pedal (6) by a connection part (5), the link member (4) comprising:
a master cylinder connection part (44) coupled to a master cylinder (9) through a push rod (8);
a collision part (43) which comes into collision with a part of the vehicle body in a frontal collision of the vehicle;
wherein the connection part (5) is positioned on an extended line of the push rod (8) in relation to the master cylinder connection part (44);
**characterised by** an engagement part (42) which engages with the brake pedal (6) and disengages from said brake pedal (6) toward a front side of the vehicle body in the collision between the collision part (43) and the part of the vehicle body.

2. The brake pedal device (1, 10) for the automotive vehicle according to claim 1, wherein the engagement part (42) is shaped into a hook for engaging with a portion of an outer peripheral surface of a shaft member (61) disposed along the rotation center axis (X).

3. The brake pedal device (1, 10) for the automotive vehicle according to claim 2, wherein the engagement part (42) extends rearward beyond an extension line (Y) extending from the connection part (5) to the rotation center axis (X) to be hooked on the shaft member (61) for engagement.

4. The brake pedal device (1, 10) for the automotive vehicle according to any one of claims 1 to 3, wherein the pedal bracket (3) includes a rotation restricting part (36), against which the link member (4) can abut when the engagement part (42) is disengaged, so that by depressing the brake pedal (6) with the disengaged link member (4) abutted against the rotation restricting part (36), the link member (4) is allowed to slide while having its rotation restricted.

5. The brake pedal device (1, 10) for the automotive vehicle according to any one of claims 1 to 4, wherein the brake pedal (6) includes a rotation restricting part (36) for restricting rotation of the link member (4) by contact with the link member (4) when the link member (4) having the disengaged engagement part (42) rotates a predetermined amount relative to the brake pedal (6).

## Patentansprüche

1. Bremspedalvorrichtung (1, 10) für ein Kraftfahrzeug, umfassend:
ein Bremspedal (6), das schwenkbar gelagert ist, um frei drehbar um eine Drehmittelachse (X) zu sein, die an einer an einer Fahrzeugkarosserie befestigten Pedalhalterung (3) vorgesehen ist; und
ein Verbindungselement (4), das durch ein Verbindungsteil (5) drehbar mit dem Bremspedal (6) verbunden ist, wobei das Verbindungselement (4) umfasst:
ein Hauptzylinderverbindungsteil (44), das über eine Schubstange (8) mit einem Hauptzylinder (9) gekoppelt ist;
ein Kollisionsteil (43), das bei einem Frontalaufprall des Fahrzeugs in Kollision mit einem Teil der Fahrzeugkarosserie gerät;
wobei das Verbindungsteil (5) auf einer verlängerten Linie der Schubstange (8) in Bezug auf das Hauptzylinderverbindungsteil (44) positioniert ist;
**gekennzeichnet durch** ein Eingriffsteil (42), das mit dem Bremspedal (6) in Eingriff steht und sich von dem Bremspedal (6) in Richtung einer Vorderseite der Fahrzeugkarosserie bei der Kollision zwischen dem Kollisionsteil (43) und dem Teil der Fahrzeugkarosserie löst.

2. Bremspedalvorrichtung (1, 10) für das Kraftfahrzeug nach Anspruch 1, wobei das Eingriffsteil (42) zu einem Haken geformt ist, um mit einem Abschnitt einer äußeren Umfangsfläche eines Wellenelements (61) in Eingriff zu stehen, das entlang der Drehmittelachse (X) angeordnet ist.

3. Bremspedalvorrichtung (1, 10) für das Kraftfahrzeug nach Anspruch 2, wobei sich das Eingriffsteil (42) über eine verlängerte Linie (Y) hinaus nach hinten erstreckt, die sich vom Verbindungsteil (5) bis zur Drehmittelachse (X) erstreckt, die zum Eingriff an dem Wellenelement (61) eingehängt wird.

4. Bremspedalvorrichtung (1, 10) für das Kraftfahrzeug nach einem der Ansprüche 1 bis 3, wobei die Pedalhalterung (3) einen Drehbeschränkungsteil (36) beinhaltet, an dem das Verbindungselement (4) anliegen kann, wenn das Eingriffsteil (42) gelöst ist, so dass durch Niederdrücken des Bremspedals (6) mit dem ausgekuppelten Verbindungselement (4), das an dem Drehbeschränkungsteil (36) anliegt, das Verbindungselement (4) gleiten kann, während seine Drehung eingeschränkt wird.

5. Bremspedalvorrichtung (1, 10) für das Kraftfahrzeug nach einem der Ansprüche 1 bis 4, wobei das Bremspedal (6) einen Drehbeschränkungsteil (36) zum Beschränken der Drehung des Verbindungselements (4) durch Kontakt mit dem Verbindungselement (4) beinhaltet, wenn das Verbindungselement (4) mit dem ausgekuppelten Eingriffsteil (42) sich um einen vorbestimmten Betrag relativ zum Bremspedal (6) dreht.

## Revendications

1. Dispositif de pédale de frein (1, 10) pour un véhicule à moteur, comprenant :
une pédale de frein (6) supportée de manière pivotante pour pouvoir tourner librement autour d'un axe central de rotation (X) prévu au niveau d'un support de pédale (3) fixé à un corps de véhicule ; et
un élément de liaison (4) relié de manière rotative à la pédale de frein (6) par une pièce de connexion (5), l'élément de liaison (4) comprenant :
une pièce de connexion de maître-cylindre (44) couplée à un maître-cylindre (9) par l'intermédiaire d'une tige de poussée (8) ;
une pièce de collision (43) qui entre en collision avec une pièce du corps de véhicule lors d'une collision frontale du véhicule ;
où la pièce de connexion (5) est positionnée sur une ligne étendue de la tige de poussée (8) par rapport à la pièce de connexion du maître-cylindre (44) ;
**caractérisé par** une pièce d'engagement (42) qui s'engage avec la pédale de frein (6) et se désengage de ladite pédale de frein (6) vers un côté avant du corps de véhicule lors de la collision entre la pièce de collision (43) et la pièce du corps de véhicule.

2. Dispositif de pédale de frein (1, 10) pour le véhicule à moteur selon la revendication 1, où la pièce d'engagement (42) présente une forme de crochet pour s'engager avec une portion d'une surface périphérique externe d'un élément d'arbre (61) positionné le long de l'axe central de rotation (X).

3. Dispositif de pédale de frein (1, 10) pour le véhicule à moteur selon la revendication 2, où la pièce d'engagement (42) s'étend vers l'arrière au-delà d'une ligne d'extension (Y) s'étendant de la pièce de connexion (5) à l'axe central de rotation (X) pour être accrochée sur l'élément d'arbre (61) en vue de son engagement.

4. Dispositif de pédale de frein (1, 10) pour le véhicule à moteur selon l'une quelconque des revendications 1 à 3, où le support de pédale (3) comprend une pièce de limitation de rotation (36), contre laquelle l'élément de liaison (4) peut venir en butée lorsque la pièce d'engagement (42) est désengagée, de sorte qu'en enfonçant la pédale de frein (6) avec l'élément de liaison désengagé (4) en butée contre la pièce de limitation de rotation (36), l'élément de liaison (4) soit autorisé à glisser tout en ayant sa rotation limitée.

5. Dispositif de pédale de frein (1, 10) pour le véhicule à moteur selon l'une quelconque des revendications 1 à 4, où la pédale de frein (6) comprend une pièce de limitation de rotation (36) pour limiter la rotation de l'élément de liaison (4) par contact avec l'élément de liaison (4) lorsque l'élément de liaison (4) ayant la pièce d'engagement désengagée (42) tourne d'une quantité prédéterminée par rapport à la pédale de frein (6).
